Europäisches Patentamt

European Patent Office

Office européen des brevets

(19)

(11) Publication number: **0 031 963**
A1

(12) # EUROPEAN PATENT APPLICATION

(21) Application number: 80108222.3

(22) Date of filing: 27.12.80

(51) Int. Cl.³: **B 60 R 9/12**

(30) Priority: 08.01.80 IT 6701780
24.04.80 IT 5315880 U

(43) Date of publication of application:
15.07.81 Bulletin 81/28

(84) Designated Contracting States
AT BE CH DE FR LI NL SE

(71) Applicant: La PREALPINA S.A.S. di Destefanis Maria &
C.
Strada Orbassano, 47
I-10040 Volvera Province of Torino(IT)

(72) Inventor: Taschero, Mario
Strada Orbassano, 49
I-10040 Volvera Torino(IT)

(74) Representative: Modiano, Guido et al,
MODIANO & ASSOCIATI S.A.S. Via Meravigli, 16
I-20123 Milan(IT)

(54) Cartop carrier structure which can be converted from a ski rack into a general purpose carrier, and viceversa.

(57) A cartop carrier is described comprising portal elements
(10) each including at least one horizontal cross-piece (11) and
at least one bar detachably hinged to the cross-piece (11) and
effective to be lowered thereon for holding a plurality of skis
or detached therefrom to allow luggage in general to be
arranged on the cross-piece (11).

EP 0 031 963 A1

./...

Fig. 1

This invention relates to a cartop carrier structure of the type comprising portal elements or arched beams and suitable for installation on the roof of road vehicles in general, and in particular passenger cars, preferably by resting on the side gutters.

Structures of this same general type are currently utilized for **various specific purposes** **such** as ski racks and general purpose carriers, the latter term identifying a carrier structure formed from a pair of portal-like resting elements which define an ideal load platform.

Currently known structures intended for ski carrying comprise, in turn, two portal elements, or arched beams, having holding blocks and/or a swingable safety bar which can be lowered onto the skis and locked in a closed position -- as a theft preventing measure -- by means of a key-operated lock.

The task of the invention, which is based upon the same principles as the aforementioned conventional structures and their differentiated use, is essentially directed to providing a cartop carrier, or more generally, a cartop carrier structure with portal elements, as specified, which is adaptable for both uses by conversion from a ski rack into a general purpose carrier, and viceversa.

Within this task a main object of the invention is to provide a cartop carrier structure which can be converted as specified, is simple, lightweight, reliable, and relatively inexpensive, as well as adapted for partial conversion, thereby it can be selectively utilized for carrying at the same time skis and luggage.

According to one aspect of the present invention, there is provided a general purpose cartop carrier structure for motor vehicles in general and passenger cars in particular, characterized in that it comprises portal elements each whereof comprises at least one horizontal cross-piece having a yielding material resting pad and at least one bar detachably hinged to said cross-piece and engaged by a locking member, said bar being adapted to be lowered onto a plurality of at least in part flat objects to be carried such as ski pairs laid flat onto said cross-piece for firmly holding said ski pairs as said carrier is used as a cartop ski rack, and to be removed for enabling luggage articles to be laid directly onto the cross-piece of the portal element as said carrier is used as a general purpose cartop carrier.

In order to ensure a reliable hold on said plurality ski pairs, the bar is provided, on its inner side facing the cross-piece, with a gasket formed from a yielding material, advantageously an elastomer. Preferably, moreover, each portal element is formed from two portions coupled together by an intermediate connecting cross-piece segment effective to allow adjustment of its span for adaptation to different vehicles, and each portion is provided with a holding bar of its own hinged detachably, thereby the portal element can also be adapted for partly carrying skis and partly carrying other luggage items by the removal of a single holding bar. The detachable hinged connection between the portal element, or respectively the portion of the portal element, and related holding bar is advantageously accomplished by providing said element with a hollow seat and a top retaining bridge set in an undercut, and by shaping the end of the bar to an arc of a circle.

Further features and advantages will become apparent from the following detailed description, with reference to the accompanying illustrative, and not limitative, drawings, where:

Figure 1 is an elevation view of a portion of a portal element of the carrier structure according to the invention, in its ski rack version, the other portion being symmetrical and symmetrically arranged with respect to the centerplane of the portal element;

Figure 2 is an elevational view similar to the preceding one but showing the portal portion in the luggage carrying version thereof;

Figures 3 and 4 are detail views of the detachable hinge connection between the holding bar and cross-piece of the portal element;

Figure 5 is a top plan view taken along the line V-V of Figure 4;

Figure 6 is a sectional view taken along the line VI-VI of Figure 5; and

Figures 7 and 8 are views similar to Figures 3 and 4 but showing a variation of the detachable hinge connection.

In the drawings, the reference numeral 10 designates a portion of a portal, or arched beam, element of the inventive structure. The portion 10 is connected, through an intermediate connecting cross-piece segment 40, to an identical and symmetrical portion 20; the two portions and the intermediate cross-piece segment form the portal element the span or width whereof can be adjusted to adapt the element to different types of vehicles.

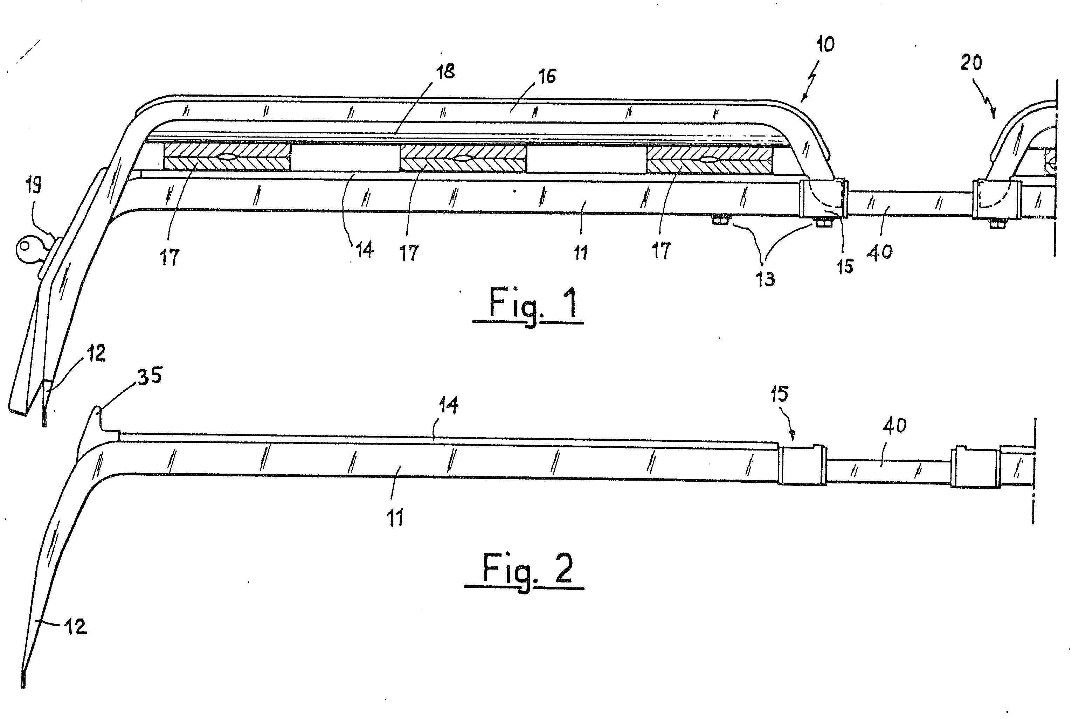

Each portion comprises substantially a base cross-piece 11 which extends into a foot 12 to be fitted into the side gutter or intended to rest on the roof, if the carrier is to be installed on gutter-less vehicles. On the opposite side, the cross-piece 11 is made hollow to receive in sliding relationship the intermediate cross-piece segment 40, the latter being lockable in a selected adjust position by means of bolts 13. On the side facing the load surface, the cross-piece 11 is equipped with a pad 14 made of an elastically yielding material, preferably a polymeric material, having its surface corrugated or otherwise crumpled to improve its holding power on the load. At the cross-piece end remotely located from the foot 12, there is formed a hinged connection 15 affording a swinging movement means for a detachable upper bar 16, which can be lowered to hold a plurality 17 of ski pairs securely where the structure is to be used as a ski rack type of carrier (Figure 1). For this purpose, the bar is provided, on its inner side facing the cross-piece 11, with a gasket 18 formed from an elastomeric material and preferably of hollow configuration, the yielding rate thereof is selected such as to ensure a reliable retention of the skis once the bar has been lowered to the closed position. The bar is further provided, in a manner known per se, with a substantially L-shaped bent end which in the closed position, overlies the foot 12 of the portal element, and carries a lock cylinder 19 having a rotatable tooth adapted for engagement in a seat formed in the foot itself. The cross-piece 11 and bar 16, therefore, make up a ski rack of the type commonly termed anti-theft. The hinged connection 15 is provided to enable, through a suitable tilting movement, the removal of the bar 16 such as to make the structure suitable for use as a general purpose cartop carrier (Figure 2).

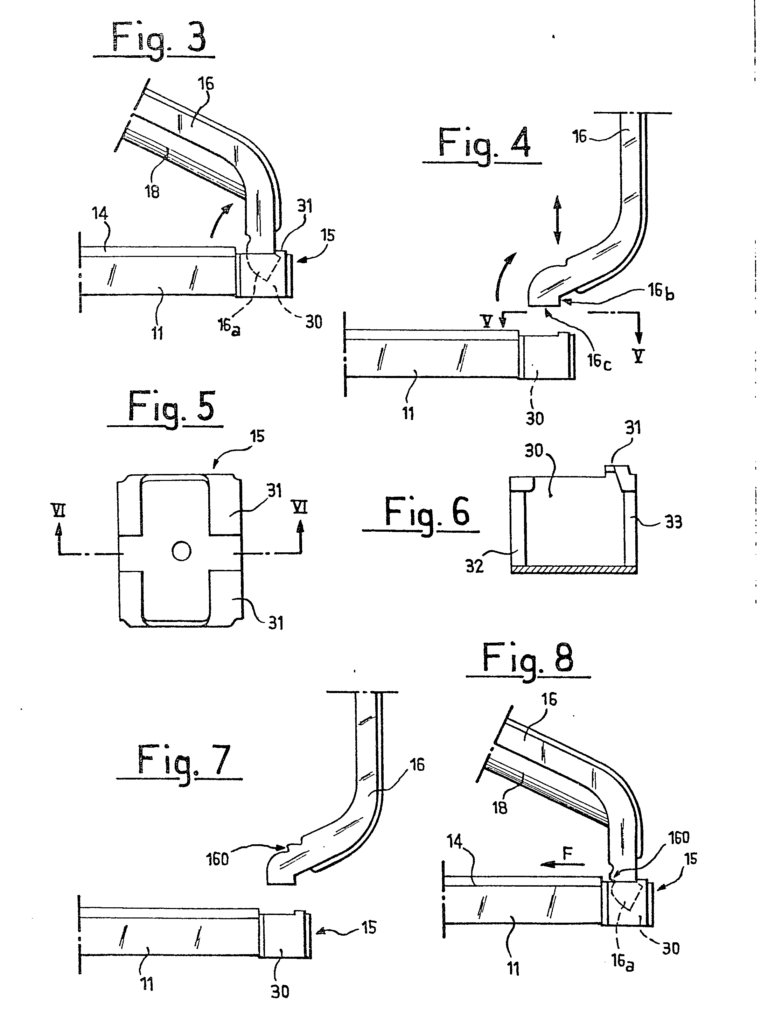

To this aim, it is provided with a hollow seat 30 formed therein, which is adapted for accommodating the end 16a of the bar, which end has the shape of an arc of a circle and a step 16b effective to engage in undercut relationship -- with the bar in its closed position -- a retaining bridge 31 arranged over the seat 30. The drawings further show how the terminating section 16c of the end 16a of the bar extends perpendicularly to the longitudinal axis of the bar, to allow both for the withdrawal and insertion of said end from and into the seat as the bar is rotated through a 90° angle with respect to the cross-piece 11 of the structure (Figure 4). Conversely, for any intermediate **rotations** of the bar, the latter is held engaged by the mutual engagement of the step 16b with the undercut bridge 31.

The variation shown in Figures 7 and 8 is directed to improving said detachable hinge connection by the provision of means adapted to hold the bar in the open position thereof, thereby the use of the structure as a ski-carrying roof rack is made more convenient and the skis can be more easily loaded and unloaded therefrom.

To this end, on the end portion 16a, there is formed an auxiliary tooth 160 positioned such that it remains external to the upper contour or rim of the cross-piece seat 30 when the bar 16 is in its open position, as shown in Figure 2. The tooth 160 is intended for engaging said upper contour or rim in order to hold the bar in the open position, and for this purpose — after the bar has been swung to the open position — it will be sufficient to move the bar by a short distance in the direction of its engagement, as indicated by the arrow F. The bar is swung back to its closed position by a reverse procedure whereby it is first moved in the opposite direction to the arrow F.

The seat 30 is provided with passage ports, a front one 32 and a rear one 33, and has a cross-sectional configuration such that it contains the intermediate cross-piece segment 40. The latter will have a channel cross-section or, if provided with a closed contour cross-section, it will be formed with upper openings, optionally separated by solid regions, to allow the end 16a of the bar 16 to be inserted, and the detachable hinge connection to be formed as specified.

Furthermore, it should be noted that at the opposite end of the cross-piece 11 to the hinge 15, there is formed an upstanding lug 35 which serves for retaining the luggage sideways when the structure is utilized in its general purpose carrier function.

Obviously, and based upon the principle of this invention, the details of construction and embodiment thereof may be amply modified with respect to the description and illustration provided herein by way of example and not of limitation, without departing from the scope of the invention.

## CLAIMS

1. A general purpose cartop carrier structure for motor vehicles in general and passenger cars in particular, characterized in that it comprises portal elements (10) each whereof comprises at least one horizontal cross-piece (11) having a yielding material resting pad (14) and at least one bar (16) detachably hinged to said cross-piece (11) and engaged by a locking member (19), said bar (16) being adapted to be lowered onto a plurality of at least in part flat objects to be carried such as ski pairs laid flat onto said cross-piece (11) for firmly holding said ski pairs as said carrier is used as a cartop ski rack, and to be removed for enabling luggage articles to be laid directly onto the cross-piece (11) of the portal element (10) as said carrier is used as a general purpose cartop carrier.

2. A cartop carrier according to Claim 1, wherein said bar (16) is provided, on the inner side thereof facing said cross-piece (11), with a gasket (18) formed from a yielding material, advantageously an elastomeric material and preferably one of tubular cross-section.

3. A cartop carrier according to the preceding claims, wherein each portal element (10) is formed in two portions (10) united together by an intermediate connecting cross-piece segment (40) which enables the span of said portal element (10) to be changed, each portion (10) being provided with a respective detachably hinged holding bar (15,16), thereby the portal element (10) can be adapted partly for carrying skis and partly for carrying luggage items in general by removing one holding bar only.

4. A cartop carrier according to the preceding claims, wherein the detachable hinge connection (15) between the portal element (10), or respectively a portion of the portal element, and the related holding bar (16) is accomplished by providing on the cross-piece (11) of the portal element (10) a hollow seat (30) with an upper retention bridge (31) in undercut relationship and by shaping one end (16a) of the bar (16) to an arc of a circle.

5. A cartop carrier according to the preceding claims, wherein the terminating section of the end (16a) shaped to an arc of a circle of the bar (16) is perpendicular to the longitudinal axis thereof to allow for both the withdrawal and insertion of said end (16a) from and into the respective seat (30) when the bar (16) is rotated through 90° with respect to the cross-piece (11).

6. A cartop carrier according to the preceding claims, wherein the end of the bar (16) located remote from the end forming the detachable hinge has a portion bent to an "L" which, in the closed position, overlies the foot (12) of the respective portal element (10) and carries a lock cylinder (19) having a rotatable tooth adapted for engaging a seat (30) formed in said foot (12).

7. A cartop carrier according to the preceding claims, characterized in that the end whereat the bar (16) is hinged carries an auxiliary tooth (160) intended for engaging the upper rim of the hinged connection seat (30) in the cross-piece (11) to prevent the bar (16) from being lowered when the same is in the open position by means of a limited displacement of the bar parallel to itself.

Fig. 1

Fig. 2

0031963

# Fig. 3

# Fig. 4

# Fig. 5

# Fig. 6

# Fig. 7

# Fig. 8

**European Patent Office**

**EUROPEAN SEARCH REPORT**

## DOCUMENTS CONSIDERED TO·BE RELEVANT

| Category | Citation of document with indication, where appropriate, of relevant passages | Relevant to claim |
|---|---|---|
| | US - A - 3 273 768 (F.L. DUER) <br> * fig. 1, 2 * <br> -- | 1 |
| | US - A - 3 223 302 (F.A. HELM) <br> * fig. 1, 6 * <br> -- | 2 |
| | US - A - 3 601 294 (D.J. GJESDAHL) <br> * fig. 1 * <br> -- | 3 |
| A | US - A - 3 638 844 (J. BRONSON) <br> -- | |
| A | US - A - 3 239 115 (J.A. BOTT et al.) <br> ----- | |

**CLASSIFICATION OF THE APPLICATION (Int. Cl.³)**

B 60 R    9/12

**TECHNICAL FIELDS SEARCHED (Int. Cl.³)**

B 60 R   9/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

X  The present search report has been drawn up for all claims

| Place of search | Date of completion of the search | Examiner |
|---|---|---|
| Berlin | 25-03-1981 | BECKER |

EPO Form 1503.1   06.78